# EUROPEAN PATENT APPLICATION

(11) **EP 4 496 186 A1**
(43) Date of publication of application: **22.01.2025**
(21) Application number: 23770757.5
(22) Date of filing: 14.03.2023
(51) Int. Cl.: H02K 1/276

(54) **INTERIOR PERMANENT MAGNET MOTOR AND ROTOR THEREOF**

(30) Priority: 16.03.2022 JP 2022041036
(71) Applicant: Aichi Steel Corporation, Tokai-shi, Aichi 476-8666 (JP)
(72) Inventor: HAMADA, Norihiko, Tokai-shi, Aichi 476-8666 (JP); ITO, Kazunori, Tokai-shi, Aichi 476-8666 (JP)
(74) Representative: Kuhnen & Wacker Patent- und Rechtsanwaltsbüro PartG mbB
(86) International application number: PCT/JP2023/009745
(87) International publication number: WO 2023/176802

(57) **Abstract**

Provided is a rotor for an interior permanent magnet motor capable of improving performance by increasing interlinkage magnetic flux. The present invention provides a rotor for an interior permanent magnet motor in which permanent magnets (3) are enclosed in slots (12) of a rotor core (1) made of a magnetic material. The rotor core has a non-magnetic region (110) on the outside of a frame end located on at least one side of one or more of the slots. This non-magnetic region is biased to the side farther from a magnetic pole center (Pc) with reference to a frame end center (Ps) of the slot. The non-magnetic region may be provided in a bridge located on the outer circumferential end side of a slot or in a rib located between adjacent slots. The non-magnetic region is formed, for example, by subjecting a part of an electromagnetic steel sheet to non-magnetic modification. At least a part of the non-magnetic region may be composed of a narrow portion in which the radial width of the bridge or a distance between the adjacent ribs is smaller than surroundings.

## Description

### [Technical Field]

The present invention relates to a rotor for an interior permanent magnet motor and relevant techniques.

### [Background Art]

There are various types of electric motors (simply referred to as "motors," including generators). In recent years, with the development of inverter control and the widespread of high-performance rare earth magnets, synchronous motors that can save power and have high efficiency are widely used.

A synchronous motor is an AC motor that has permanent magnets (field sources) in the rotor and armature windings (coils) in the stator. The rotor is driven by supplying alternating current (AC) to the armature windings to generate rotating magnetic fields in the stator.

Synchronous motors include surface permanent magnet synchronous motors (referred to as "SPM motors"), in which permanent magnets are arranged on the surface of the rotor, and interior permanent magnet synchronous motors (referred to as "IPM motors"), in which the permanent magnets are arranged inside the rotor. Currently, IPM motors are mainstream, as they not only provide high torque and energy savings, but also improve reliability by preventing the permanent magnets from scattering. Descriptions relating to such IPM motors are found in the following patent documents.

### [Prior Art Documents]

### [Patent Documents]

Patent Document 1: JP2013-247850A
Patent Document 2: JP2015-201997A
Patent Document 3: WO2022/004672

### [Summary of Invention]

### [Technical Problem]

Patent Documents 1 to 3 all propose providing non-magnetic portions (regions) in outer circumferential end portions (bridges) of magnet holes (slots) of a rotor core. This prevents the magnetic fluxes supplied from the permanent magnets from short-circuiting in the bridges, thus improving the performance of the motors.

However, none of the patent documents describes or suggests the arrangement, form, or the like of the non-magnetic portions (regions) in the bridges.

The present invention has been made in view of such circumstances, and an object of the present invention is to provide a novel rotor, etc. that can improve the performance of an interior permanent magnet motor.

### [Solution to Problem]

As a result of intensive studies, the present inventors have newly discovered that it is possible to increase the interlinkage magnetic fluxes generated between the rotor and the stator by reconsidering the arrangement of the non-magnetic regions provided on the outside of frame ends of the slots.

### «Rotor for Interior Permanent Magnet Motor»

(1) The present invention provides a rotor for an interior permanent magnet motor in which permanent magnets are enclosed in slots of a rotor core made of a magnetic material. The rotor core has a non-magnetic region on an outside of a frame end located on at least one side of one or more of the slots. The non-magnetic region is biased to a side farther from a magnetic pole center with reference to a frame end center of the slot.
(2) First, the rotor for an interior permanent magnet motor of the present invention (simply referred to as "the rotor") has a non-magnetic region on the outside of a frame end of a slot. This prevents a part of the magnetic flux, which is supplied from the permanent magnet through the portion/region on the outside of the frame end (referred to as "the frame end portion" as appropriate), from being short-circuited. Next, the non-magnetic region is provided to be biased to the side farther from the magnetic pole center (also referred to as "the outside" as appropriate) with reference to the frame end center of the slot. In the peripheral region outside the frame end, therefore, the magnetic flux from the permanent magnet is guided to the stator through the magnetic region (portion other than the "non-magnetic region") located on the side closer to the magnetic pole center (also referred to as "the inside" as appropriate). Thus, the interlinkage magnetic fluxes between the rotor and the stator are increased, and the performance of the IPM motor is improved accordingly.

### «Interior Permanent Magnet Motor»

The present invention can also be perceived as an IPM motor. For example, the present invention may provide an interior permanent magnet motor including the above-described rotor and a stator that constitutes an armature. In this case, the non-magnetic region provided on the outer circumferential end side (near the bridge) of the slot (rotor core) may have, for example, a circumferential length (minimum length in the circumferential direction) larger than the width of a gap (usually an air gap) formed between the rotor and the stator. Additionally or alternatively, the radial length (minimum length in the radial direction) of the non-magnetic region may be preferably larger than the width of the gap. This allows the magnetic flux supplied from the permanent magnet to be readily guided toward the stator side on the outer circumferential end side of the slot (rotor core).

### « Other s»

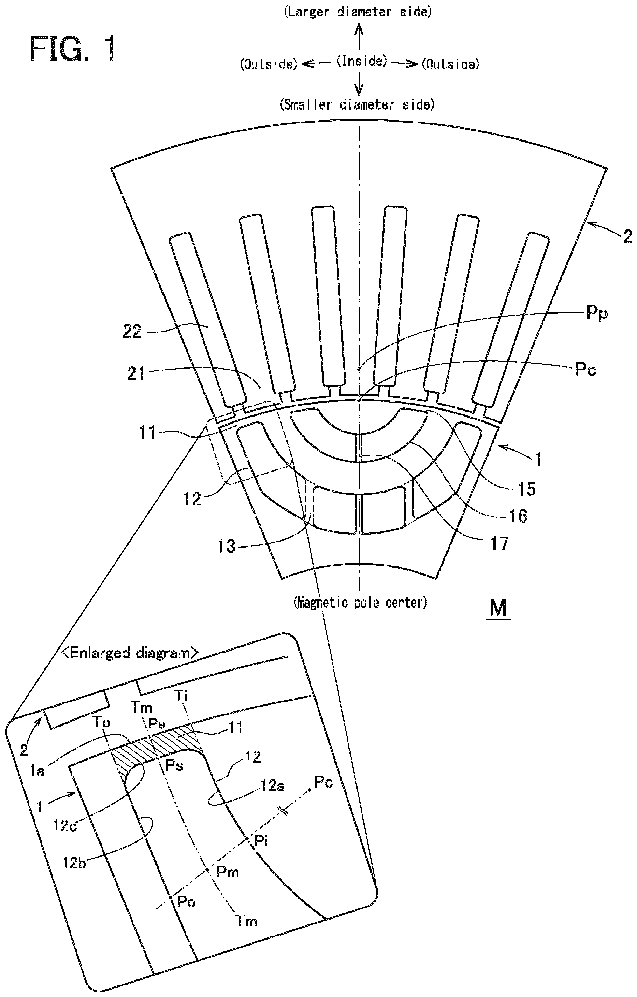

(1) The "non-magnetic region" and "magnetic region (region other than the non-magnetic region)" as referred to in the present specification are determined based on how easy a magnetic flux passes. For example, the non-magnetic region may preferably have a lower (initial) magnetic permeability, a lower saturation magnetic flux density, or a higher magnetic resistance than the magnetic region. Adjustment of the magnetic permeability may be performed, for example, by changing the material quality (such as composition or structure). Adjustment of the saturation magnetization can be performed, for example, by changing the material quality as well as by changing the form (such as narrowing or creating an air gap).
(2) The "magnetic pole center" as referred to in the present specification is a virtual point in each magnetic pole of the rotor, toward which the magnetic flux supplied from the permanent magnet proceeds. The magnetic pole center is located on the center line (symmetric line) of each magnetic pole and near the outer circumferential end line of the rotor (e.g., point Pc or point Pp illustrated in FIG. 1). The position of the magnetic pole center in the radial direction varies depending on the specs of the rotor (electric motor), but in the present specification, for descriptive purposes, the intersection point between the center line (symmetric line) of the magnetic pole and the outer circumferential end line of the rotor (e.g., point Pc illustrated in FIG. 1) is defined as the "magnetic pole center."

The "frame end center" is basically defined as the intersection point between each of frame lines that partition a slot and the center line of the slot (e.g., point Ps illustrated in FIG. 1). However, if necessary for partitioning a non-magnetic region, the line segment connecting the intersection point and the point where the center line of the slot intersects with the rotor's outer circumferential end line or with the frame line of another slot (e.g., point Pe illustrated in FIG. 1) may be defined as the "frame end center."

The center line of a slot is defined as a locus of midpoints between intersection points that are formed such that a straight line drawn from the magnetic pole center intersects with frame lines of the slot. Exemplifying this based on FIG. 1, a locus (Tm) along which midpoints (Pm) of both intersection points (Pi, Po) that are formed between the straight line extending from the magnetic pole center (Pc) and frame lines of the slot are arranged is the center line of the slot.

The slot is usually provided in an arc shape surrounding the magnetic pole center. When a slot is divided by a rib or the like and two or more small slots are arranged in an arc shape, the inner/outer frame lines of each small slot (a frame line close to the magnetic pole center and a frame line far from the magnetic pole center) are extended (extrapolated) to consider a virtual large slot (a slot connected without ribs or the like). The intersection points (or line segments) formed between the center line of the large slot and the frame ends of the small slots are the frame end centers.

As referred to in the present specification, the "circumferential direction" is a direction around the rotor's rotation center (axis), and the "radial direction" is a direction extending radially from the rotor's rotation center. The direction of approaching or departing from the magnetic pole center may be based on any of the circumferential direction, radial direction, a combination of these directions, etc. The "rotor" may be an inner rotor or an outer rotor. It is sufficient that the number of magnetic poles of an IPM motor (the number of slots provided in the rotor or stator, etc.) may be two or more.

### «Others»

Unless otherwise stated, a numerical range "x to y" as referred to in the present specification includes the lower limit x and the upper limit y. Any numerical value included in various numerical values or numerical ranges described in the present specification may be selected or extracted as a new lower or upper limit, and any numerical range such as "a to b" can thereby be newly provided using such a new lower or upper limit.

### [Brief Description of Drawings]

FIG. 1 is a partial cross-sectional diagram exemplifying portions of one magnetic pole of a rotor and a stator.
FIG. 2A is a set of a schematic diagram and a contour diagram illustrating magnetic flux lines around the bridge of the rotor (first example).
FIG. 2B is a set of a schematic diagram and a contour diagram illustrating magnetic flux lines around the bridge (second example).
FIG. 2C is a set of a schematic diagram and a contour diagram illustrating magnetic flux lines around the bridge (third example).
FIG. 2D is a schematic diagram illustrating magnetic flux lines around the bridge (fourth example).
FIG. 3A is a schematic diagram illustrating magnetic flux lines around the bridge (first modified example).
FIG. 3B is a schematic diagram illustrating magnetic flux lines around the bridge (second modified example).
FIG. 3C is a schematic diagram illustrating magnetic flux lines around the bridge with a modified form.
FIG. 4 is a set of contour diagrams illustrating magnetic flux lines when non-magnetic regions are provided in bridges and ribs.

### [Embodiments for Carrying out the Invention]

One or more features freely selected from the matters described in the present specification can be added to the above-described features of the present invention. Methodological features regarding a method can also be features regarding a product (rotor or the like). Which embodiment is the best or not is different in accordance with objectives, required performance, and other factors.

### «Rotor Core»

The rotor core is made of a magnetic material and is provided with at least one or more slots for each magnetic pole. In the slots, respective permanent magnets are enclosed (embedded). A non-magnetic region is formed on the outside of a frame end of at least one of the slots. The non-magnetic region may be provided on only one outside of the frame end, or non-magnetic regions may be provided on both outsides of the frame end.

### (1) Slots

The shape, arrangement, number of layers, etc. of the slots vary depending on the specs of the rotor (IPM motor). The slots of each magnetic pole are usually provided symmetrically with respect to the magnetic pole center so as to surround the magnetic pole center.

### (2) Frame End Portions

The portion/region located on the outside of a frame end of a slot (frame end portion) is a bridge located on the outer circumferential end side of the rotor core, a rib that reinforces an approximately arc shaped large slot and divides the large slot into small slots, or the like. There are usually at least two or more bridges for each magnetic pole. If two-layered slots (see FIG. 1) are provided for each magnetic pole, there will be four bridges for each magnetic pole. The form of bridges can change depending on the form of slots and non-magnetic regions, etc. For example, the bridges may be in an arc shape with an approximately constant radial width, in a mound-like shape with a variable radial width, etc. If a bridge or rib is to be partitioned, it may be partitioned within a range in which a region on the outside of a frame end of the slot is cut out by the extension lines extrapolated from the inner frame line and outer frame line of the slot.

### (3) Non-magnetic Regions and Magnetic Regions

The non-magnetic region is provided to be biased toward the outside of a frame end portion (the side farther from the magnetic pole center), so conversely, the magnetic region is provided to be biased toward the inside of the frame end portion (the side closer to the magnetic pole center). Provided that such a magnetic region is formed on the side of the magnetic pole center, the range in which the non-magnetic region is provided or the form of the non-magnetic region is not limited.

The non-magnetic region may be provided, for example, beyond the range of the above-described bridge or rib. However, excessive extension of the non-magnetic region to the outside will cause a decrease in the reluctance torque of an IPM motor. For this reason, the outer edge of the non-magnetic region may be preferably along (approximately coincident with) the outer edge of the frame end portion.

The non-magnetic region may be obtained, for example, by giving some change of material quality (such as composition or structure) (referred to as "non-magnetic modification (non-magnetic improvement)" or simply "modification") to a magnetic material (such as electromagnetic steel sheet) that constitutes the magnetic region or by changing the form to the magnetic region. As an example of the latter, at least a part of the non-magnetic region may be narrowed in the radial direction relative to the magnetic region. This allows the magnetic flux passing through the non-magnetic region to readily be saturated. As a matter of course, both the material quality and the form may be changed to the magnetic region. Narrowing of the non-magnetic region can also result in a reduction of the modified region.

Non-magnetic modification is performed, for example, by the method described in the previously described Patent Document 3 (WO2022/004672), etc. In particular, by using irradiation with a high-energy beam (such as laser), fine regions can be modified with a high degree of accuracy. In this case, the narrower the non-magnetic region, the more efficient the modification and the more suppressed the distortion.

«Permanent Magnets»

The permanent magnets enclosed in the slots may be sintered magnets obtained by sintering compacts of magnetic particles or bonded magnets obtained by binding (fixing) magnetic particles with a binder resin. Bonded magnets have a large degree of freedom in shape and are suitable for slots having complex shapes. The magnetic particles are not limited in the type, form (such as particle diameter), degree of anisotropy, etc.

The permanent magnets may be preferably magnetized in the slots toward the vicinity of the magnetic pole center (oriented diagonally from the radial direction). This can increase the magnetic fluxes passing through the inside of the frame end portions (magnetic regions). Such permanent magnets are achieved by molding and magnetizing them in the slots in magnetic fields. In the case of bonded magnets, for example, anisotropic (rare earth) magnet particles may be used and merely molded in the slots of the rotor core in oriented magnetic fields. In this case, it is preferred to preliminarily form the non-magnetic regions before molding the bonded magnets.

### Examples

Simulations have been conducted for the effects of the arrangement and form of the non-magnetic regions provided in the rotor for an IPM motor on the interlinkage magnetic fluxes between the rotor and the stator. On the basis of such specific examples, the present invention will be described in detail below.

### «Base Model»

The plan view of a base model M used in the simulations (simply referred to as "Model M") is illustrated in FIG. 1. Model M is one pole (1/8 model) of an IPM motor composed of eight magnetic poles. Model M includes a rotor core 1, a stator core 2, and permanent magnets 3. The rotor core 1 and the stator core 2 are each composed of a laminate of electromagnetic steel sheets punched into a desired shape. As illustrated in FIG. 1, Model M is line-symmetrical with respect to the magnetic pole center (center line), and in the circumferential direction, the side closer to the magnetic pole center Pc is the inside while the side farther from the magnetic pole center Pc is the outside. The side farther from the center of rotation of the rotor core 1 will be referred to as a larger diameter side, and the side closer to the center of rotation of the rotor core 1 will be referred to as a smaller diameter side.

The rotor core 1 has two layers of approximately U-shaped slots 12 and 16 that are symmetrically arranged with respect to the magnetic pole center. The slot 12 located on the outside of the rotor core 1 is divided into four by three ribs 13 (reinforcement portions) located on the rotation center side. The slot 16 located on the inside of the rotor core 1 is divided into two by one rib 17.

The frame sides located on the outermost circumferential end sides of the slots 12 and 16 are bridges 11 and 15 (frame ends). The range of the bridge 11 is, for example, a region (hatched area) surrounded by a frame end line 12c of the slot 12, an outermost circumferential line 1a of the rotor core 1, and extension lines that are extrapolated from an inner frame line 12a and an outer frame line 12b of the slot 12. The same applies to the range of the bridge 15. The bridges 11 and 15 (frame end portions) and the ribs 13 (reinforcement portions) correspond to the outsides of frame ends of the slots 12 and 16.

The insides of the slots 12 and 16 are both filled with bonded magnets 3. The portions other than the slots 12 and 16 are basically magnetic regions made of electromagnetic steel sheets.

The stator core 2 has five teeth 21 and six slots 22 that include two slots located on both sides of each tooth 21 in the circumferential direction. The slots 22 are provided with armature windings (coils). The portions other than the slots 22 are basically magnetic regions made of electromagnetic steel sheets.

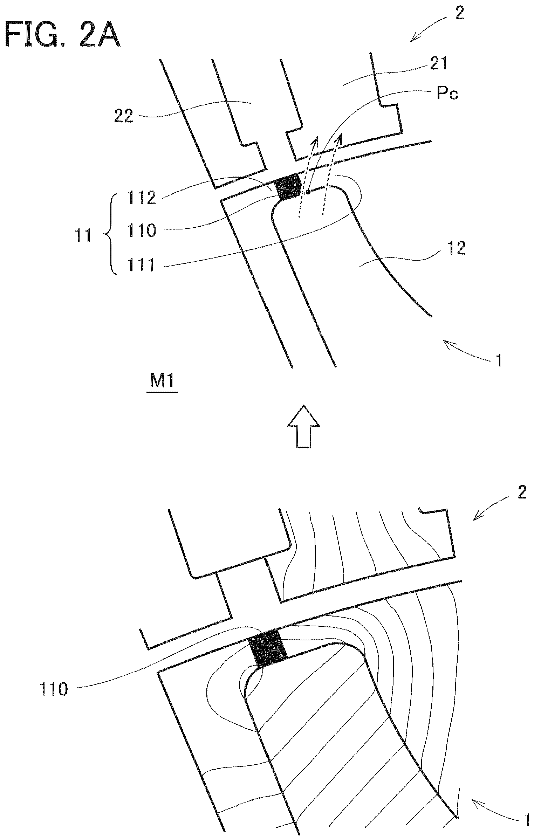

The permanent magnets 3 are, for example, bonded magnets that are molded in the slots 12 and 16 in a state of being applied with oriented magnetic fields from the outer circumference side of the rotor core 1. The bonded magnets are formed, for example, by binding anisotropic rare earth magnetic particles with a binder resin. The method of molding may be injection molding or compression molding. The bonded magnets molded in the slots 12 and 16 in oriented magnetic fields are magnetized almost toward the magnetic pole center, as illustrated in FIG. 2A, etc., which will be described later, and generate magnetic fluxes in that direction (i.e., are oriented). The bonded magnets may be magnetized from the outer circumference side of the rotor core 1 after the molding (after solidification of the binder resin).

### «Simulations»

### (1) Models

The effects of the non-magnetic region provided in the bridge 11 on the magnetic fluxes around the bridge 11 have been evaluated by simulations using Models M1 to M4 as follows.

In Model M1, as illustrated in FIG. 2A, the bridge 11 is set with a non-magnetic region 110, a magnetic region 111 located on the inside of the non-magnetic region 110, and a magnetic region 112 located on the outside of the non-magnetic region 110. The non-magnetic region 110 is disposed on the outside of the frame end center Ps. This makes the magnetic region 111 longer than the magnetic region 112 in the circumferential direction. The non-magnetic region 110 is formed, for example, by non-magnetic modification (such as modification to stainless steel) using laser irradiation or the like.

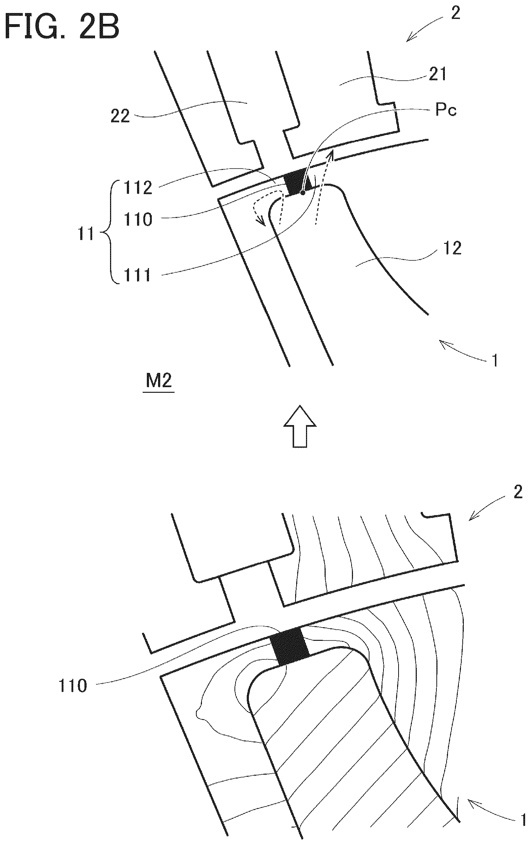

In Model M2, as illustrated in FIG. 2B, the center of the non-magnetic region 110 is approximately coincident with the frame end center Ps. This makes the circumferential lengths of the magnetic region 111 and the magnetic region 112 approximately the same. Other than that, Model M2 is the same as Model M1.

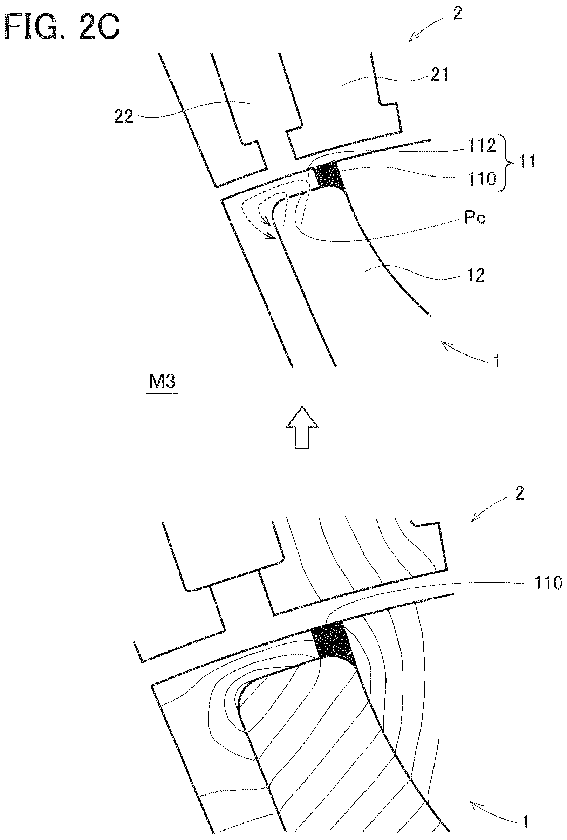

In Model M3, as illustrated in FIG. 2C, the non-magnetic region 110 and the magnetic region 112 located on the outside of the non-magnetic region 110 are set in the bridge 11. In other words, the non-magnetic region 110 is disposed on the inside of the frame end center Ps, and no magnetic region 111 is provided on the inside of the non-magnetic region 110. Other than that, Model M3 is the same as Model M1.

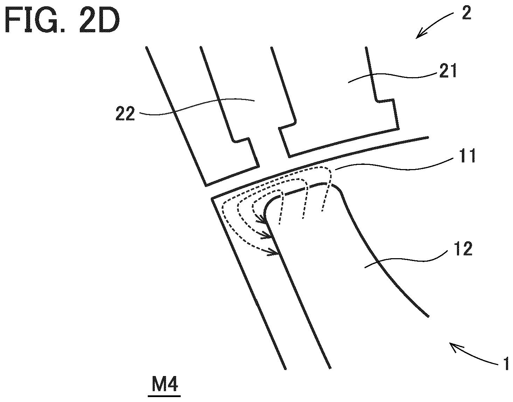

In Model M4, as illustrated in FIG. 2D, the non-magnetic region 110 is not provided, and the entire bridge 11 is made into a magnetic region.

### (2) Conditions

The analysis conditions are set as follows. The rotor core 1 and the stator core 2 are made of a laminate of non-oriented electromagnetic steel sheets (50HXT780T). The rotor core 1 has an outer diameter of ϕ80 mm and a central hole diameter of cp45 mm. The circumferential length of the bridge 11 is 3 mm, the circumferential length of the non-magnetic region 110 is 1 mm, and the width (radial length) of the non-magnetic region 110 is 0.5 mm (same as the width of the bridge 11). The gap (air gap) between the rotor core 1 and the stator core 2 is 0.5 mm. In this example, the circumferential length will be referred to as "the length" and the radial length as "the width" as appropriate.

In Model M1, the length of the magnetic region 111 is 1.5 mm, and the length of the magnetic region 112 is 0.5 mm. In Model M2, the length of the magnetic region 111 is 0.75 mm, and the length of the magnetic region 112 is 0.75 mm. In Model M3, the length of the magnetic region 112 is 1.5 mm.

### (3) Results

The analysis results for Models M1 to M3 are illustrated in the lower parts of FIGS. 2A to 2C as contour diagrams of magnetic flux lines. The flows of magnetic flux lines based on the contour diagrams are also illustrated schematically above the contour diagrams. For Model M4, the flows of magnetic flux lines are illustrated schematically in FIG. 2D.

«Evaluation»

As apparent from FIGS. 2A to 2D, it has been found that by placing the non-magnetic region provided in the bridge closer to the outside (i.e., by expanding the magnetic region on the inside rather than expanding the magnetic region on the outside), the magnetic fluxes supplied from the permanent magnet on the rotor side can be more effectively guided to the stator side without short-circuiting in the bridge. Specifically, the length of the magnetic region on the inside may be preferably 3/2 times or more, twice or more, or even three times or more the length of the magnetic region on the outside.

### «Supplementary Note»

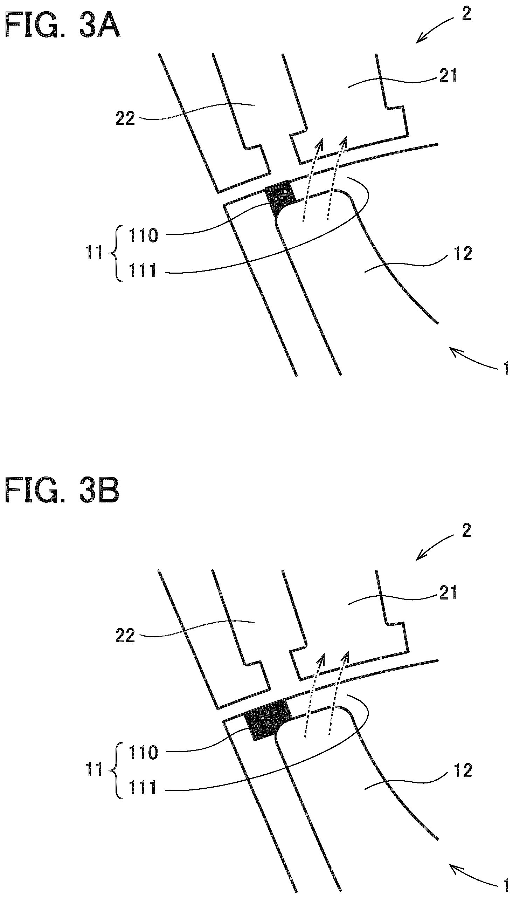

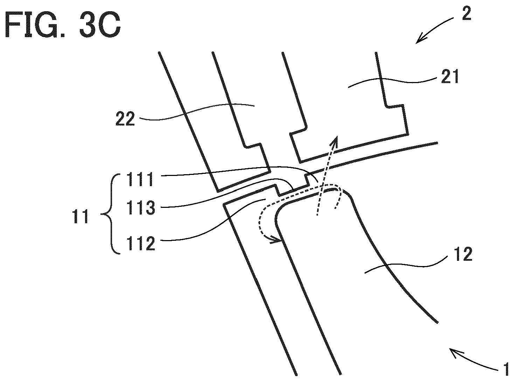

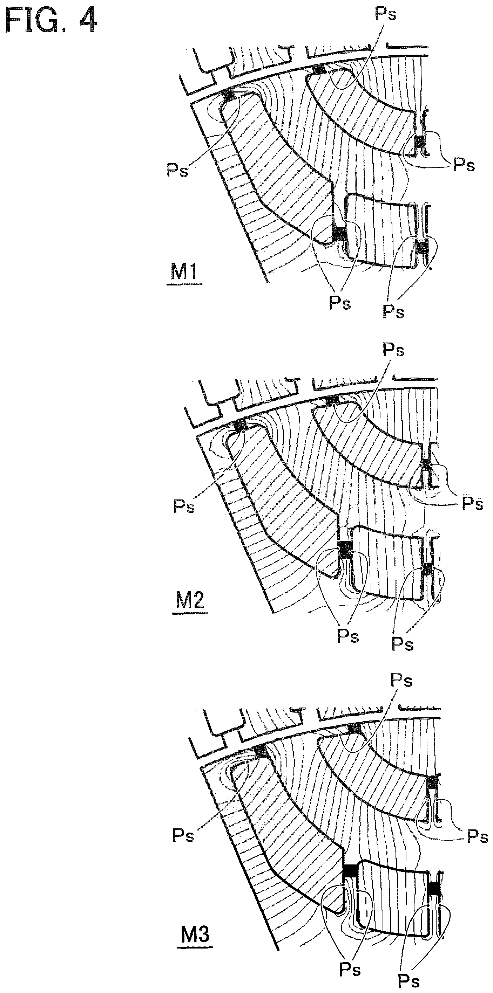

(1) As illustrated in FIG. 3A, the bridge 11 may include only the non-magnetic region 110 and the magnetic region 111 on the inside (the magnetic region 112 on the outside may be eliminated). Furthermore, as illustrated in FIG. 3B, the non-magnetic region 110 may be expanded to the outside beyond the range of the bridge 11.
   The non-magnetic region 110 may be a modified portion of the magnetic material, or as illustrated in FIG. 3C, may also be a narrow portion 113 that is narrower in the radial direction than the magnetic regions 111 and 112. As a matter of course, the narrow portion 113 may be further modified to be non-magnetic.
(2) The non-magnetic regions (such as modified regions) may be provided not only in bridges but also in ribs between slots. The above-described simulations have been conducted using models in which the non-magnetic regions are provided in the bridges 11 and the ribs 13 and 17. The results are summarized in FIG. 4. Models M1 to M3 illustrated in FIG. 4 correspond to Models M1 to M3 illustrated in FIG. 2A to FIG. 2C. That is, in Model M1, the non-magnetic region is located on the outside of the frame end center Ps (on the smaller diameter side). In Model M2, the center of the non-magnetic region is approximately coincident with the frame end center Ps. In Model M3, the non-magnetic region is located on the inside of the frame end center Ps (on the larger diameter side).

As apparent from FIG. 4, it has been found that by arranging the non-magnetic regions on the outside not only in the bridges but also in the ribs, the magnetic fluxes that detour unnecessarily can be reduced to increase the interlinkage magnetic fluxes from the rotor to the stator side.

### [Description of Reference Numerals]

- 1: Rotor core
- 2: Stator core
- 3: Permanent magnet
- 11: Bridge
- 110: Non-magnetic region
- 111: Magnetic region

## Claims

1. A rotor for an interior permanent magnet motor in which permanent magnets are enclosed in slots of a rotor core made of a magnetic material,
the rotor core having a non-magnetic region on an outside of a frame end located on at least one side of one or more of the slots,
the non-magnetic region being biased to a side farther from a magnetic pole center with reference to a frame end center of the slot.

2. The rotor for an interior permanent magnet motor according to claim 1, wherein the non-magnetic region is provided in a bridge located on an outer circumferential end side of one of the slots and/or in a rib located between adjacent slots

3. The rotor for an interior permanent magnet motor according to claim 1 or 2, wherein the non-magnetic region is configured such that a part of an electromagnetic steel sheet is subjected to non-magnetic modification.

4. The rotor for an interior permanent magnet motor according to claim 2, wherein at least a part of the non-magnetic region comprises a narrow portion in which a radial width of the bridge or a distance between the adjacent ribs is smaller than surroundings.

5. An interior permanent magnet motor comprising:
the rotor according to any one of claims 1 to 4; and
a stator that constitutes an armature.

6. The interior permanent magnet motor according to claim 5, wherein the non-magnetic region provided on an outer circumferential end side of one of the slots has a circumferential length larger than a width of a gap formed between the rotor and the stator.
